# EUROPÄISCHE PATENTANMELDUNG

(11) **EP 2 706 261 A2**
(43) Veröffentlichungstag der Anmeldung: **12.03.2014**
(21) Anmeldenummer: 13181126.7
(22) Anmeldetag: 21.08.2013
(51) Int. Cl.: F16F 15/139, F16F 15/14

(54) **Drehmomentübertragungseinrichtung**

(30) Priorität: 06.09.2012 DE 102012215852
(71) Anmelder: Schaeffler Technologies AG & Co. KG, 91074 Herzogenaurach (DE)
(72) Erfinder: Maienschein, Stephan, 76534 Baden-Baden (DE); Krause, Thorsten, 77815 Bühl (DE)

(57) **Zusammenfassung**

Drehmomentübertragungseinrichtung (10), umfassend eine als Anfahrkupplung ausgebildete nasslaufende Kupplungseinrichtung (12), aufweisend: eine Drehachse (100); ein Eingangsteil (13) und ein Ausgangsteil (32), wobei unter Ausbildung eines Drehmomentübertragungswegs eine Drehmomentübertragung zwischen Eingangsteil und Ausgangsteil erfolgen kann; eine Reibeinrichtung (22) zum lösbaren Verbinden eines Kupplungseingangsteils (20) mit einem Kupplungsausgangsteil (24), wobei eine Tilgermasse (36) zur Tilgung von Drehschwingungen über die Wirkung eines parallel zum Drehmomentübertragungsweg wirksam angeordneten elastischen Koppelelements (44) gegenüber einem Bauteil der Kupplungseinrichtung begrenzt verdrehbar angebunden ist.

## Beschreibung

Die Erfindung betrifft eine Drehmomentübertragungseinrichtung nach dem Oberbegriff von Anspruch 1.

Derartige Drehmomentübertragungseinrichtungen sind allgemein bekannt. So umfassen diese eine nasslaufende Kupplungseinrichtung, aufweisend eine Drehachse, ein Eingangsteil und ein Ausgangsteil, wobei unter Ausbildung eines Drehmomentübertragungswegs eine Drehmomentübertragung zwischen Eingangsteil und Ausgangsteil erfolgen kann, sowie eine Reibeinrichtung zum lösbaren Verbinden eines Kupplungseingangsteils mit einem Kupplungsausgangsteil.

Die Aufgabe liegt darin, eine verbesserte Drehschwingungsisolation in einer derartigen Drehmomentübertragungseinrichtung zu bewirken.

Die Aufgabe wird durch alle Merkmale des Gegenstands gemäß Anspruch 1 gelöst.

Dementsprechend wird eine Drehmomentübertragungseinrichtung, umfassend eine als Anfahrkupplung ausgebildete nasslaufende Kupplungseinrichtung, aufweisend eine Drehachse, ein Eingangsteil und ein Ausgangsteil, wobei unter Ausbildung eines Drehmomentübertragungswegs eine Drehmomentübertragung zwischen Eingangsteil und Ausgangsteil erfolgen kann, eine Reibeinrichtung zum lösbaren Verbinden eines Kupplungseingangsteils mit einem Kupplungsausgangsteil vorgeschlagen, wobei eine Tilgermasse zur Tilgung von Drehschwingungen über die Wirkung eines parallel zum Drehmomentübertragungsweg wirksam angeordneten elastischen Koppelelements gegenüber einem Bauteil der Kupplungseinrichtung begrenzt verdrehbar angebunden ist. Dadurch können Drehschwingungen teilweise oder vollständig gedämpft bzw. getilgt werden.

In einer weiteren vorteilhaften speziellen Ausgestaltung der Erfindung ist wenigstens ein Koppelelement in eine erste und wenigstens ein weiteres Koppelelement in eine entgegengesetzte zweite Drehrichtung wirksam angeordnet.

Vorzugsweise sind die beiden Koppelelemente in Ruhestellung der Tilgermasse vorgespannt angeordnet, so dass eine Rückstellkraft auf die Tilgermasse in beide Drehrichtungen einwirken kann

In einer weiteren speziellen Ausführungsform der Erfindung ist die Tilgermasse an einem Kupplungsausgangsteil oder einem drehfest mit diesem verbundenen Bauteil angebunden.

Alternativ dazu oder zusätzlich kann die Tilgermasse auch an einem Kupplungseingangsteil oder einem drehfest mit diesem verbundenen Bauteil angebunden sein.

In einer speziellen Ausgestaltung der Erfindung ist ein Drehschwingungsdämpfer in dem Kupplungsgehäuse angeordnet, umfassend ein Dämpfereingangsteil und ein entgegen der Wirkung wenigstens eines wirksam in dem Drehmomentübertragungsweg angeordneten Energiespeicherelements gegenüber dem Dämpfereingangsteil begrenzt verdrehbares Dämpferausgangsteil.

Vorteilhafterweise ist die Tilgermasse an einem entgegen der Wirkung des Energiespeicherelements gegenüber dem Kupplungsausgangsteil begrenzt verdrehbaren Bauteil angebunden.

In einer weiteren bevorzugten Ausgestaltung der Erfindung ist die Tilgermasse in dem Drehmomentübertragungsweg wirksam vor der Reibeinrichtung angeordnet.

In einer weiteren speziellen Ausgestaltung der Erfindung umfasst die Tilgermasse ein Tilgermassenelement und einen Tilgermassenträger zur Aufnahme des Tilgermassenelements.

Vorzugsweise ist der Tilgermassenträger auf einer Abtriebsnabe zentriert aufgenommen.

Weitere Vorteile und vorteilhafte Ausgestaltungen der Erfindung ergeben sich aus der Beschreibung und den Abbildungen, bei deren Darstellung zugunsten der Übersichtlichkeit auf eine maßstabsgetreue Wiedergabe verzichtet wurde. Alle erläuterten Merkmale sind nicht nur in der angegebenen Kombination, sondern auch in anderen Kombinationen beziehungsweise in Alleinstellung anwendbar, ohne den Rahmen der Erfindung zu verlassen.

Die Erfindung wird im Folgenden unter Bezugnahme auf die Abbildungen im Speziellen beschrieben. Es zeigen im Einzelnen:
- Figur 1:: Querschnitt eines Ausschnitts einer Drehmomentübertragungseinrichtung in einer speziellen Ausführungsform der Erfindung.
- Figur 2a:: Blockschaltbild einer Drehmomentübertragungseinrichtung in einer speziellen Ausführungsform der Erfindung.
- Figur 2b:: Blockschaltbild einer Drehmomentübertragungseinrichtung in einer weiteren speziellen Ausführungsform der Erfindung.
- Figur 2c:: Blockschaltbild einer Drehmomentübertragungseinrichtung in einer weiteren speziellen Ausführungsform der Erfindung.

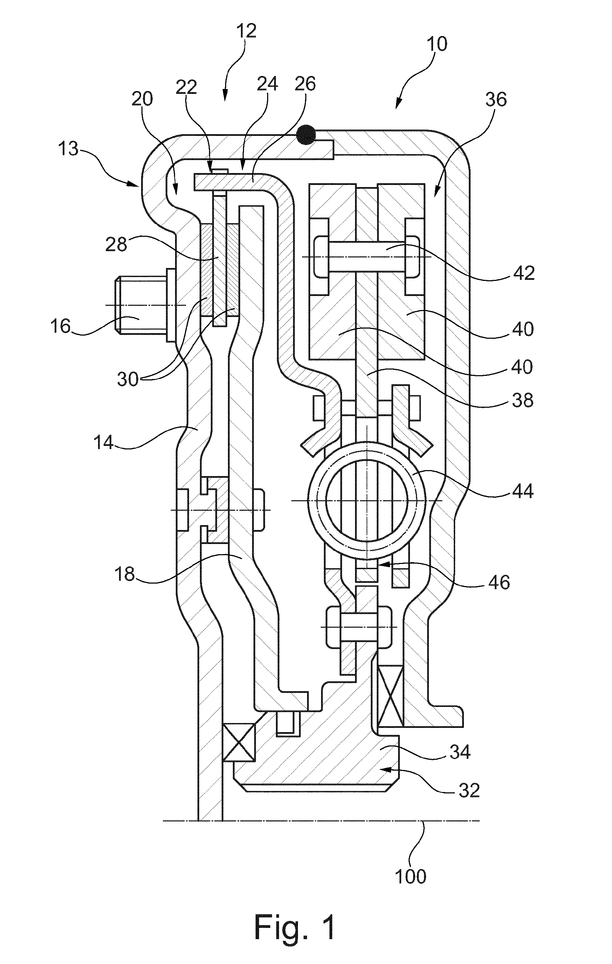

Figur 1 zeigt einen Querschnitt eines Ausschnitts einer Drehmomentübertragungseinrichtung 10 in einer speziellen Ausführungsform der Erfindung. Bestandteil der Drehmomentübertragungseinrichtung 10 bildet eine als Anfahrkupplung ausgebildete und um eine Drehachse 100 drehbare nasslaufende Kupplungseinrichtung 12, die von einem zweiteilig ausgebildeten und ein Eingangsteil 13 bildenden Kupplungsgehäuse 14 umschlossen wird, worin ein Fluid aufgenommen ist. Das Kupplungsgehäuse 14 ist mit einem Mitnehmerelement 16 mit einer Antriebsseite verbindbar. Das Mitnehmerelement 16 ist an dem Kupplungsgehäuse 14 befestigt, insbesondere verschweißt oder vernietet.

In dem Kupplungsgehäuse 14 ist ein axial verschiebbares Kolbenelement 18 eingebracht, das mit dem Kupplungsgehäuse 14 drehfest verbunden ist, insbesondere vernietet ist. Das Kolbenelement 18 bildet zusammen mit einem Teil des Kupplungsgehäuses 14 ein Kupplungseingangsteil 20.

Zwischen diesem Kolbenelement 18 und dem Kupplungsgehäuse 14 ist eine Reibeinrichtung 22 angeordnet, zur Bewirkung einer reibschlüssigen und lösbaren Verbindung zwischen dem Kupplungseingangsteil 20 und einem Kupplungsausgangsteil 24. Hierbei bewirkt eine axiale Verlagerung des Kolbenelements 18 ein Anpressdruck zwischen dem Kupplungseingangsteil 20 und dem Kupplungsausgangsteil 24. Das Kupplungsausgangsteil 24 ist als äußerer Lamellenträger 26 ausgebildet zur drehfesten und axial verschiebbaren, verzahnten Aufnahme einer Reiblamelle 28, die wiederum axial jeweils beidseitig einen oder mehrere Reibbeläge 30 aufnimmt oder in Wirkkontakt mit diesen gebracht werden kann.

Der Lamellenträger 26 umgreift das Kolbenelement 18 und ist nach radial innen verlängert und mit einer ein Ausgangsteil 32 bildenden Abtriebsnabe 34 drehfest verbunden. Die Abtriebsnabe 34 weist eine Innenverzahnung auf und kann mit einer Getriebeeingangswelle drehfest verbunden werden.

Insgesamt wird ein Drehmomentübertragungsweg zwischen Eingangsteil 13 und Ausgangsteil 32 gebildet, über den ein Drehmoment zwischen einer Antriebsseite, beispielsweise einem Antriebselement wie einer Brennkraftmaschine oder einem Elektromotor und einer Abtriebsseite, beispielsweise einem Getriebe übertragen werden kann.

Parallel wirksam zum Drehmomentübertragungsweg ist eine Tilgermasse 36 vorzugsweise innerhalb des Kupplungsgehäuses 14 eingebracht. Die Tilgermasse 36 besteht aus einem Tilgermassenträger 38 und aus axial beidseitig an dem Tilgermassenträger 38 befestigten Tilgermassenelementen 40. Dazu sind die Tilgermassenelemente 40 mit durch den Tilgermassenträger 38 durchgreifenden Abstandsbolzen 42 miteinander fest und auch fest mit dem Tilgermassenträger 38 verbunden.

Der Tilgermassenträger 38 und damit die Tilgermasse 36 ist über die Wirkung wenigstens eines parallel zum Drehmomentübertragungsweg wirksam angeordneten elastischen Koppelelements 44, hier in Form einer Schraubenfeder ausgebildet, mit dem Kupplungsausgangteil 24 wirksam verbunden. Dabei ist eine begrenzte Verdrehung der Tilgermasse 36 gegenüber dem Kupplungsausgangteil 24 möglich zur Bewirkung einer Tilgung von Drehschwingungen.

Der Tilgermassenträger 38 kann mit einem radial inneren Abschnitt 46 auf der Abtriebsnabe 34 aufgenommen und zentriert sein.

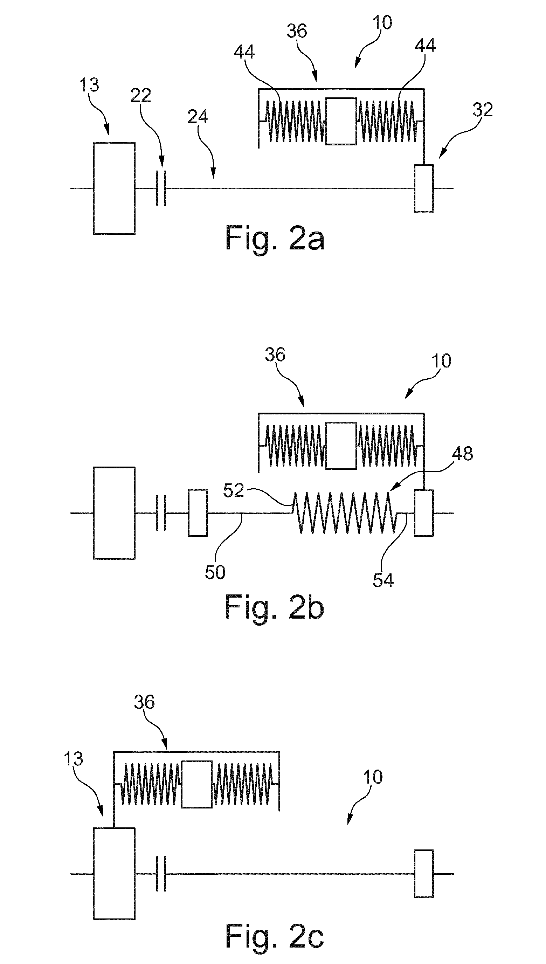

In Figur 2a ist ein Blockschaltbild einer Drehmomentübertragungseinrichtung 10 in einer speziellen Ausführungsform der Erfindung dargestellt. Dabei wird zwischen einem Eingangsteil 13 und einem Ausgangsteil 32 ein Drehmomentübertragungsweg gebildet, der durch eine Reibeinrichtung 22 aufgetrennt und geschlossen werden kann. An dem Ausgangsteil 32, beispielsweise an einer Abtriebsnabe oder an einem Kupplungsausgangsteil 24 ist eine Tilgermasse 36 über die Wirkung jeweils wenigstens eines in beide Drehrichtungen wirksamen elastischen Koppelelements 44 angebunden. Dabei ist das Koppelelement 44 parallel wirksam zu dem Drehmomentübertragungsweg und somit auch die Tilgermasse 36.

Figur 2b zeigt ein Blockschaltbild einer Drehmomentübertragungseinrichtung 10 in einer weiteren, speziellen Ausführungsform der Erfindung. Hierbei ist ein Drehschwingungsdämpfer 48 bestehend aus einem Dämpfereingangsteil 50 und einem entgegen der Wirkung wenigstens eines wirksam in dem Drehmomentübertragungsweg angeordneten Energiespeicherelements 52 gegenüber dem Dämpfereingangsteil 52 begrenzt verdrehbaren Dämpferausgangsteil 54. Die Tilgermasse 36 ist an dem Dämpferausgangsteil 54 oder einem mit diesem drehfest verbundenen Bauteil angebracht.

In Figur 2c ist ein Blockschaltbild einer Drehmomentübertragungseinrichtung 10 in einer weiteren, speziellen Ausführungsform der Erfindung dargestellt. Die Tilgermasse 36 befindet sich hier an dem Eingangsteil 13 und ist an diesem oder einem mit dem Eingangsteil 13 drehfest verbundenen Bauteil befestigt.

### Bezugszeichenliste

- 10: Drehmomentübertragungseinrichtung
- 12: Kupplungseinrichtung
- 14: Kupplungsgehäuse
- 16: Mitnehmerelement
- 18: Kolbenelement
- 20: Kupplungseingangsteil
- 22: Reibeinrichtung
- 24: Kupplungsausgangsteil
- 26: Lamellenträger
- 28: Reiblamelle
- 30: Reibbeläge
- 32: Ausgangsteil
- 34: Abtriebsnabe
- 36: Tilgermasse
- 38: Tilgermassenträger
- 40: Tilgermassenelement
- 42: Abstandsbolzen
- 44: Koppelelement
- 46: Abschnitt
- 48: Dämpfereingangsteil
- 50: Dämpfereingangsteil
- 52: Energiespeicherelement
- 54: Dämpferausgangsteil

## Patentansprüche

1. Drehmomentübertragungseinrichtung (10) umfassend eine als Anfahrkupplung ausgebildete nasslaufende Kupplungseinrichtung (12), aufweisend:
eine Drehachse (100);
ein Eingangsteil (13) und ein Ausgangsteil (32), wobei unter Ausbildung eines Drehmomentübertragungswegs eine Drehmomentübertragung zwischen Eingangsteil (13) und Ausgangsteil (32) erfolgen kann;
eine Reibeinrichtung (22) zum lösbaren Verbinden eines Kupplungseingangsteils (20) mit einem Kupplungsausgangsteil (24);**dadurch gekennzeichnet, dass** eine Tilgermasse (36) zur Tilgung von Drehschwingungen über die Wirkung eines parallel zum Drehmomentübertragungsweg wirksam angeordneten elastischen Koppelelements (44) gegenüber einem Bauteil (26) der Kupplungseinrichtung (12) begrenzt verdrehbar angebunden ist.

2. Drehmomentübertragungseinrichtung (10) nach Anspruch 1, wobei wenigstens ein Koppelelement (44) in eine erste und wenigstens ein weiteres Koppelelement in eine entgegengesetzte zweite Drehrichtung wirksam angeordnet ist.

3. Drehmomentübertragungseinrichtung (10) nach Anspruch 2, wobei die beiden Koppelelemente (44) in Ruhestellung der Tilgermasse (36) vorgespannt angeordnet sind.

4. Drehmomentübertragungseinrichtung (10) nach einem der Ansprüche 1 bis 3, wobei die Tilgermasse (36) an einem Kupplungsausgangsteil (24) oder einem drehfest mit diesem verbundenen Bauteil angebunden ist.

5. Drehmomentübertragungseinrichtung (10) nach einem der Ansprüche 1 bis 3, wobei die Tilgermasse (36) an einem Kupplungseingangsteil (20) oder einem drehfest mit diesem verbundenen Bauteil angebunden ist.

6. Drehmomentübertragungseinrichtung (10) nach einem der Ansprüche 1 bis 5, wobei ein Drehschwingungsdämpfer (48) in dem Kupplungsgehäuse (14) angeordnet ist, umfassend ein Dämpfereingangsteil (50) und ein entgegen der Wirkung wenigstens eines wirksam in dem Drehmomentübertragungsweg angeordneten Energiespeicherelements (52) gegenüber dem Dämpfereingangsteil (50) begrenzt verdrehbares Dämpferausgangsteil (54).

7. Drehmomentübertragungseinrichtung (10) nach Anspruch 6, wobei die Tilgermasse (36) an einem entgegen der Wirkung des Energiespeicherelements (52) gegenüber dem Kupplungsausgangsteil (24) begrenzt verdrehbaren Bauteil angebunden ist.

8. Drehmomentübertragungseinrichtung (10) nach einem der Ansprüche 1 bis 7, wobei die Tilgermasse (36) in dem Drehmomentübertragungsweg wirksam vor der Reibeinrichtung (22) angeordnet ist.

9. Drehmomentübertragungseinrichtung (10) nach einem der Ansprüche 1 bis 8, wobei die Tilgermasse (36) ein Tilgermassenelement (40) und einen Tilgermassenträger (38) zur Aufnahme des Tilgermassenelements (40) umfasst.

10. Drehmomentübertragungseinrichtung (10) nach Anspruch 9, wobei der Tilgermassenträger (38) auf einer Abtriebsnabe (34) zentriert aufgenommen ist.
